# FASCICULE DE BREVET EUROPEEN

(11) **EP 3 847 035 B1**
(45) Date de publication et mention de la délivrance du brevet: **19.07.2023**
(21) Numéro de dépôt: 19758996.3
(22) Date de dépôt: 30.08.2019
(51) Int. Cl.: B42D 25/00, B42D 25/328, B42D 25/425, G06K 19/077, B41F 16/00, B42D 25/324, B42D 25/373, B42D 25/46, B42D 25/23, B42D 25/455

(54) **PROCÉDÉ DE FABRICATION D'UN SUPPORT À PUCE PRÉSENTANT UN EFFET DE SURFACE**
HERSTELLUNGSVERFAHREN EINER CHIP-HALTERUNG, DIE EINEN OBERFLÄCHENEFFEKT AUFWEIST
METHOD FOR PRODUCING A CHIP SUPPORT HAVING A SURFACE EFFECT

(30) Priorité: 04.09.2018 EP 18306165
(43) Date de publication de la demande: 14.07.2021
(73) Titulaire: Thales Dis France SAS, 92190 Meudon (FR)
(72) Inventeur: KODJAGUEUZIAN, Gilles, 13881 Gémenos Cedex (FR); KARAFOTIS, Stéphane, 13881 Gémenos Cedex (FR); SUBRA, Sébastien, 13881 Gémenos Cedex (FR)
(74) Mandataire: Grevin, Emmanuel
(86) Numéro de dépôt international: PCT/EP2019/073199
(87) Numéro de publication internationale: WO 2020/048885

(56) Documents cités:
- US-A- 3 897 964
- US-A- 4 325 196
- US-A1- 2003 096 084

## Description

### Domaine de l'invention.

L'invention concerne un procédé de fabrication d'un corps de support présentant un effet de surface.

Il concerne particulièrement la fabrication de supports personnalisés graphiquement, et présentant un effet de surface, tel que mat ou miroir, et indiqué par la suite par « effet tactile » du fait qu'une différence d'effet (ou de traitement de surface), se détecte au toucher, sur le corps de support.

L'invention concerne principalement des supports appartenant au domaine des cartes à puce (identité, bancaire, fidélité, accès...) et comportant des matériaux divers tels que du bois, du métal et/ou du plastique, du polymère naturel ou synthétique. Elle pourrait cependant concerner d'autres produits ou laminés notamment au format carte à puce bancaire standardisé ou non, avec ou sans puce électronique, des passeports, des feuilles laminées, des tickets radiofréquences (RFID).

Les cartes à puce peuvent avoir ou non une fonction radiofréquence et être du type à contacts et/ou sans-contact.

L'invention vise plus particulièrement des cartes bancaires, crédit, débit, des cartes à capteur biométrique, des cartes à afficheur, des cartes bancaires embossées, et/ou avec logo de sécurité, hologramme, etc.

### Art antérieur

On sait obtenir des effets tactiles (mat ou miroir) sur la carte à puce par une méthode de sérigraphie au cours du processus de fabrication des cartes à puce.

Par définition pour l'ensemble du présent document, l'effet tactile, comme son nom l'indique, concerne le sens du toucher. Dès l'instant où un traitement de surface d'une carte permet d'obtenir une différence au toucher entre différentes textures (lisse, rugueux, veines de bois, toucher soft...) de carte, on traduit cette différence par un effet tactile présent sur la carte ou conféré à la carte par ledit traitement.

L'effet tactile est apporté par un dépôt d'une couche de vernis sur le dessus de produit final donnant une finition mat ou miroir en fonction du vernis utilisé.

Dans certains pays présentant des conditions climatiques élevées (température et humidité) ; Lors d'empilements de cartes à puce bancaires après fabrication, les inventeurs ont constaté un problème de migration d'éléments du panneau de signature disposé au verso de la carte bancaires, vers un vernis tactile (mat ou brillant) disposé sur la face avant des cartes.

Afin d'éviter ce problème, on peut utiliser des séparateurs (ou feuilles) entre les cartes, mais cela ajoute les étapes d'ajout et de retrait des séparateurs..

Un autre problème technique réside dans la compatibilité du vernis tactile avec tous les processus (ou technique) de personnalisation utilisés : via laser, embossage (causant des fissures au sommet des zones embossées), transfert thermique (non compatibilité avec vernis tactile), estampage à chaud d'hologramme...

Un marquage d'information de personnalisation par transfert thermique sur un corps de carte n'adhère pas bien quand ce dernier présente une couche de vernis en surface.

De même les hologrammes, notamment en aluminium, déposés par transfert thermique n'adhérent pas bien en raison de la couche de vernis en surface.

Concernant l'embossage de caractères de personnalisation, il se produit des fissures au sommet des caractères embossés au niveau du vernis qui peuvent se propager dans les couches sous-jacentes du corps de carte.

Une solution imaginée par les inventeurs est d'utiliser des plaques de métal avec surface gravées et/ou plus ou moins lisses (ou rugueuses) pour estamper à chaud des cartes et obtenir un état de surface très similaire à un effet tactile (mat ou brillant) d'un vernis ou présentant des éléments de personnalisation sur les surfaces externes des cartes. Toutefois, ce procédé impliquerait de disposer énormément de plaques gravées excessivement onéreuses pour une production à l'échelle industrielle.

En outre, il est nécessaire d'effectuer un bon positionnement des plaques gravées par rapport à l'impression offset (plaques avec picots de registration (ou de positionnement) qui permettent de positionner les feuilles par rapport à la gravure). Cette solution des inventeurs parait complexe, très onéreuse et de ce fait, plus adapté à des petites séries que des grandes séries industrielles.

On connaît des films polymères de la société Kurz généralement utilisés pour supporter des matériaux de transfert thermique (métallisation, hologrammes...) afin de les transférer thermiquement et physiquement sur la carte (par estampage à chaud).

Ce type de film de la société Kurz semble être utilisé uniquement comme film-support pour véhiculer des matériaux ou autre élément (hologramme...) à transférer physiquement du film-support donneur vers un support receveur. Le film opère donc comme film-support de matériau de transfert à chaud, toujours associé au matériau ou à un élément à transférer physiquement et entièrement du film-support donneur à un autre support receveur de l'élément.

Le document US 3 897 964 décrit une carte d'identification et son procédé de fabrication. Une couche colorée est fixée sur un corps de carte puis des motifs en forme de points fins ou lignes fines sont engravés en surface de la couche colorée.

Le document US 2003096084 A1 décrit des procédés de fabrication sans distorsion de supports de données comportant au moins dans des zones partielles une couche plastique transparente avec une structure de surface sous la forme d'une structure de lentille.

Le document US 4 325 196 A décrit une carte d'identification multicouche stratifiée comprenant une pluralité de couches individuelles reliées les unes aux autres et ayant au moins une surface extérieure qui est directement en contact. La couche externe présente un motif en relief de surface sous forme d'impression taille-douce qui est directement accessible.

### Problème technique.

L'invention vise à résoudre les inconvénients précités.

L'invention a pour objectif un procédé de fabrication de support flexible au format carte (au sens large et de toutes dimensions) incluant une ou plusieurs étape(s) de personnalisation graphique) et présentant un effet de surface tactile qui ne présente pas les problèmes ci-dessus.

L'invention vise un procédé qui soit de préférence économique industriellement (à grande échelle de production).

Elle vise préférentiellement la fabrication et personnalisation des cartes à puce notamment bancaires (crédit, débit) ou passeports électroniques.

### Résumé de l'invention.

L'invention propose un procédé de fabrication selon la revendication 1.

Ainsi, l'invention s'affranchit des inconvénients ci-dessus en supprimant le vernis (après maintes observations et considérations des inventeurs) et en obtenant un effet équivalent à celui du vernis, en mettant en œuvre une étape de finition par une technique de marquage de surface.

Les inventeurs ont en effet analysé la situation et déduit que le vernis était la cause des effets indésirables, visés ci-dessus, sur la carte.

La suppression du vernis (ainsi que ses avantages d'effet tactile), n'est rendue possible que grâce à une manière de personnalisation graphique pouvant procurer un rendu similaire et ce à un coût réduit et à des cadences industrielles.

Pour des raisons de cadences industrielles et de coût, la personnalisation ou l'obtention de l'effet de surface de finition est réalisée par l'intermédiaire d'un poinçonnage de la surface de la carte à travers un film.

Selon un mode préféré, un graphisme ou motif graphique selon un premier niveau d'échelle dit macroscopique est reproduit sur le poinçon tandis qu'un graphisme ou motif graphique à un second niveau d'échelle dit microscopique est reproduit sur le film. Le rapport entre les deux niveaux d'échelle premier et second susvisés peut être par exemple d'un facteur 10, 100, 1000 ou plus. Un motif ou relief sur le poinçon peut être plus prononcé ou plus large que celui réalisé sur le film ou inversement.

Un effet de finition similaire au vernis mat ou miroir est obtenu par le recours à un film ayant en surface un état de surface avec plus ou moins d'aspérités ou d'irrégularités ou de lissage, permettant d'obtenir un effet similaire mat ou miroir.

Selon d'autres caractéristiques :
- La couche est en matière polymère ;
- le film polymère est un ruban continu ;
- Le ruban continu est déplacé pas à pas d'un poinçonnage au suivant pour présenter une nouvelle surface de ruban non poinçonnée à chaque poinçonnage ou après une série prédéterminée de poinçonnage ;
- Le film ou ruban présente une surface mat ou miroir ;
- Le poinçon présente un motif de personnalisation en relief et/ou en creux par rapport à une surface générale du poinçon ;
- Le film ou ruban est un film polymère ;
- La matière du film ou ruban polymère est choisi parmi le polyéthylène téréphtalate (PET), le polycarbonate (PC
- Le marquage peut s'effectuer à chaud, par exemple entre 100 et 250°C ;
- La personnalisation graphique comprend un dépôt d'hologramme et/ou un embossage et/ou un marquage par transfert thermique et/ou personnalisation laser et/ou dépose de pavé de signature ;
- Le film comporte un motif graphique en relief et/ou un état de surface à effet mat ou miroir.

De préférence, la couche de matière est de préférence en matière polymère.

### Descriptif des figures :

- La figure 1 illustre une carte de test basée sur une carte à puce de l'art antérieur dont une zone 3 est exempte de vernis ;
- La figure 2 illustre schématiquement le procédé d'obtention d'une carte à puce à effet mat ou miroir selon l'art antérieur ;
- La figure 3 illustre une installation pour la mise en œuvre du procédé de l'invention selon un mode de mise en œuvre préféré (avec recours à un film 12 intermédiaire) ;
- La figure 4 illustre des étapes du procédé actuel de fabrication d'une carte à effet tactile (miroir ou mat);
- La figure 5 illustre des étapes du procédé de l'invention conforme au mode préféré de mise en oeuvre.

### Description.

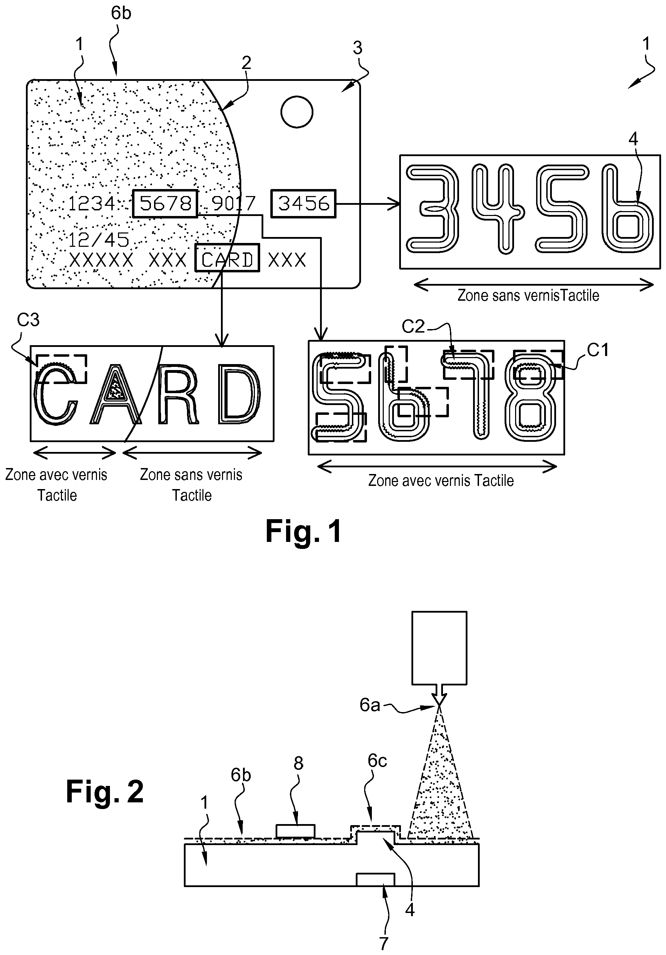

A la figure 1, est illustrée un corps support au format carte selon l'art antérieur exemplifié ici sous forme de carte à puce bancaire. La carte sert de test d'observation pour mettre en évidence les problèmes à résoudre et permettre d'entrevoir un début de solution. Elle comprend de manière classique un corps 1 de carte personnalisé graphiquement et avec à gauche une zone 2, présentant un effet tactile de surface sur le corps de carte, ledit effet étant obtenu par dépôt de vernis par sérigraphie ou jet de matière 6. Sur la droite, se trouve une zone 3 dont la surface ne comporte pas volontairement de vernis en surface. La carte de test (ou d'observation) 1 présente des caractères d'embossage 4 tels qu'un numéro de carte bancaire ou d'autres informations qui s'étendent sur les deux zones 2 et 3.

On peut constater visuellement que les caractères « 5678 » référencés 4 de la zone avec vernis présentent avec le temps des dégradations du vernis (fissures, craquelures (C1, C2) ainsi que des dégradations de la matière du corps de carte située dessous. De même pour les caractères « CARD » situées dans la zone 2 avec vernis, les caractères présentent des craquelures C3.

A contrario, les caractères « 3456 » dans la zone 3 (sans vernis) ne présentent pas de telles dégradations physiques dans la matière et mécaniques sous l'embossage.

Cette carte test réalisée par les inventeurs met en avant notamment les effets ou comportement du vernis.

A la figure 2 est illustrée schématiquement l'étape de vernissage classique de l'art antérieur 6a sur une carte 1 du type de la figure 1.

La carte 1 peut comporter classiquement selon l'art antérieur des zones embossées 4 (creux 7 et bosses correspondantes 4) ainsi que des zones comportant en surface de la matière ajoutée 8 (hologramme, marquage) déposée par transfert notamment par transfert thermique à l'aide d'un film de transfert à chaud 9 (non représenté sur cette figure mais identique ou similaire au film de la figure 2).

Selon l'art antérieur, le jet de vernis 6a est respectivement déposé sur la carte et forme respectivement une couche 6b, 6c sur la surface principale plane de la carte et sur les zones d'embossage 4 ; Puis la matière 8 (exemple un hologramme, une information marquée) est transférée à chaud sur la couche de vernis 6b.

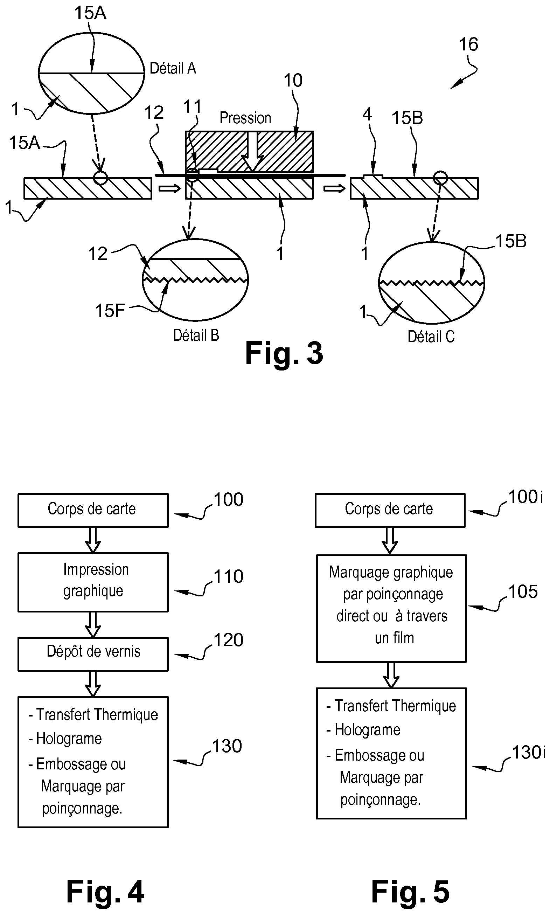

A la figure 3, est illustrée une installation schématique pour la mise en oeuvre d'étapes du procédé (fig. 5) de l'invention conformément à un exemple ou mode de réalisation préféré.

Pour permettre une comparaison de l'invention avec l'art antérieur, nous décrivons au préalable à la figure 4, les étapes du procédé d'obtention d'un corps de carte à puce présentant un graphisme en surface et correspondant à celui de la fig. 1 pour la zone 2.

Les procédés de fabrication d'un corps de support au format carte avec une personnalisation graphique présentant un effet de finition de surface plus ou moins lisse, rugueux, miroir ou mat sur ledit corps de support, respectivement selon l'art antérieur et selon l'invention, comprennent en commun l'étape 100 ou (100i) qui consiste en la fourniture d'un corps de support 1 présentant une couche de matière configurée pour permettre un marquage par poinçonnage ou lamination,

Dans l'exemple, le corps support 1 est un corps de carte à puce obtenu par lamination avec une couche de matière plastique en surface telle que de l'ABS, du PE, PET ou PC. Le corps peut être aussi obtenu par injection et comprendre une seule couche. Il peut toutefois être un corps de carte sans puce de différents formats ou surfaces ou d'épaisseur.

Le cas échéant, le corps peut comporter en surface une couche métallique (Aluminium, argent, platine, acier, or ou alliage).
A l'étape 110 (fig. 4), l'art antérieur met en oeuvre une étape d'impression graphique (par technique sérigraphique, jet d'encre, offset...) sur le corps support 1 ou ladite couche externe;
A l'étape 120, l'art antérieur met en oeuvre une étape de pulvérisation 6a ou de dépôt d'une couche de vernis à la surface du corps support (ici corps de carte 1 - voir la zone 2 de la figure.1) ;

- A l'étape 130 finale, l'art antérieur met en oeuvre une ou plusieurs étape(s) d'embossage et/ou de marquage par poinçonnage pour créer un relief de surface, ou de marquage par transfert thermique avec dépôt ou transfert de matière, tel un hologramme ou une information de personnalisation quelconque.

Au contraire, le procédé de l'invention (illustré fig. 5) par les étapes 100i, 105, 130i, se différencie par une étape 105 dans la mesure où les étapes 100i et 130i sont identiques aux étapes 100, 130 de l'art antérieur (illustré à la figure 4).

A l'étape 105, ladite « couche de matière configurée pour permettre un marquage par poinçonnage » est exposée en face principale externe ;

En outre l'invention prévoit d'obtenir ledit effet de finition de surface par une étape de marquage tout en étant exempt d'une étape de dépôt de vernis.

La mise en oeuvre d'un tel marquage de surface 105 est obtenu par poinçonnage de la surface ou de la couche externe du corps de carte. Le poinçonnage peut s'effectuer dans l'exemple préféré avec une installation 16 illustrée à la figure 3.

L'installation comprend des moyens de poinçonnage matérialisés ici par un poinçon 10. Le poinçon est configuré avec des moyens d'actionnement pour exercer une force de frappe ou de pression (de préférence à chaud) sur une face de frappe. La face de frappe présente un motif en relief (ici un creux 11) par rapport à la surface principale du poinçon.

Le poinçonnage ou marquage 105 s'effectue selon un mode de réalisation à l'aide d'un poinçon 10 (fig.3) comportant de préférence un motif 11 en relief sur sa surface de frappe destinée à presser ou frapper contre le film.

Alternativement (selon le mode préféré avec film intermédiaire 12), le relief 11 peut être formé directement sur le film 12 plutôt que sur le poinçon 10. Puis, un poinçon à tête de frappe plate notamment (sans relief 11), peut appliquer une pression sur le corps support, via le film 12, et former le relief 11 correspondant du film à la surface du corps-support par déformation (ou emboutissage) de la surface principale du corps de carte.

L'installation 16 montre un acheminement de la carte dans une position sous un poinçon P avec un relief 11 en surface de frappe ; La carte est frappée à l'aide du poinçon 10 pour marquer le relief

Selon l'invention, le marquage s'effectue par poinçonnage à l'aide du poinçon ci-dessus à travers un film 12 ou un ruban interposé entre le poinçon 10 et ladite surface principale. Le film dans l'exemple est un film transparent en matière PET avec un état de surface pour une finition mate sur la carte. Le PET est préféré pour résister à la température, la carte étant en PVC ou du moins ayant une couche externe en PVC.

Pour cela, l'invention dispose d'une installation 16 (fig. 3) pour une personnalisation graphique d'un corps de carte à puce avec un effet tactile de surface sur le corps de carte. L'installation peut comprendre des moyens d'acheminement de corps de carte vers des moyens de poinçonnage 10.

Les corps de carte présentent en surface principale une couche de matière dont la dureté permet un marquage par poinçonnage.

L'installation comprend des moyens de poinçonnage 10, 11 ou de marquage de la surface de la carte. Ces moyens comprennent un poinçon 10 avec une face de frappe et un motif en relief 11 sur sa surface de frappe ; Un plateau (ou enclume) pour supporter la carte et contre réagir à la pression du poinçon n'est pas représentée.
- L'installation 16 comprend des moyens d'acheminement (ou d'insertion) pour interposer (ou insérer) un film 12 entre le poinçon 10 et la surface 15A de la carte (surface visible sur le détail A fig. 3). Pour cela, l'installation peut prévoir des rouleaux dévidoirs et de rembobinage (non représentés) pour dévider et pour rembobiner un film 12 en ruban et des dépileurs empileurs (non représentés) de corps de carte.
- L'installation comprend des moyens pour assurer ledit marquage, par poinçonnage à travers le film 12 interposé entre le poinçon 10 et ladite surface principale 15A.

Dans l'exemple, l'installation est une machine de la société Kurz MM 7000. Le film 12 est placé directement entre le poinçon 10 et le corps de carte 1. Dans l'exemple également, le film 12 est un film polymère PET de la société Kurz. Il peut être d'une épaisseur de 12 um. En effet miroir, le film a la référence glandzend 93324 et en effet mat, le film a la référence MAT 93325.

Le film ou ruban 12 peut avoir au moins la largeur de la carte ou peut avoir au moins la largeur correspondant au motif en relief à poinçonner ou la largeur du poinçon. De préférence, le film peut être un film d'une dureté supérieure à celle de la couche de surface du corps de carte. Le film peut être un film métallique.

De préférence, en cas de poinçonnage à chaud, le film peut présenter de préférence une température de ramollissement supérieure à celle de la couche de surface du corps de carte.

De préférence, le film (ou ruban) est sous forme d'un ruban continu et se déroule en continu entre le poinçon et la carte entraîné par un moteur entre deux poulies ou rouleaux d'entrainement (ou de déroulé du film).

Le ruban continu 12 être déplacé, à chaque poinçonnage ou après une série prédéterminée de poinçonnage, d'une position de poinçonnage à la suivante pour présenter une nouvelle surface de ruban non poinçonnée. Pour cela, l'installation peut utiliser un moteur pas à pas (non représenté).

Selon une caractéristique, le film ou ruban peut présenter une surface mate ou miroir. Un effet de surface mat ou miroir est produit sur la carte du fait de la rugosité ou du lissage résidant à la surface du film. Ainsi, on peut obtenir un effet similaire à celui d'un vernis.

A la figure 3, le film 12 présente un état de surface sur sa face inférieure 15 F rugueux pour un effet mat équivalent à du vernis à effet mat.

La carte acheminée en début de parcours avant poinçonnage présente (par exemple) une surface lisse 15A (Détail A, fig. 3) ou une surface propre au PET.

Au poste de poinçonnage, la carte subit la pression (de préférence à chaud) du poinçon à travers le film 12.

Le motif en relief 11 figurant sur sa face de frappe est reproduit à travers le film 12 sur la face externe du corps de carte.

De même, l'état de surface (ou aspérités) 15F (détail B) figurant à la surface du film 12 est reproduit à la surface du corps de carte sous forme d'un état de surface correspondant 15B (Détail C).

Selon une caractéristique, le poinçon peut présenter un motif de personnalisation en relief et/ou en creux par rapport à une surface générale du poinçon. Le motif peut prendre des étendues, des formes diverses et variées. Par exemple, un quadrillage, des cercle, des symboles, des logos, des caractères alphanumériques, etc. peuvent être formés en relief sur la face de frappe 11 du poinçon. Les motifs 11 sur le poinçon peuvent être d'un niveau dimensionnel plus important que celui figurant à la surface du film (par exemple, le relief (hauteur, largeur peut être 10 à 1000 fois plus important).

La matière du film ou du ruban polymère peut être choisi parmi le polyéthylène téréphtalate (PET), le polycarbonate (PC), etc.

Le marquage ou poinçonnage s'effectue de préférence à chaud par exemple entre 100 à 250°C.

Alternativement, le film ou ruban de poinçonnage peut présenter luimême un relief formé par ailleurs. Le relief peut être d'une matière identique ou distincte de celle du film ou ruban.

Le relief peut être formé par méthode additive ou soustractive. Par exemple, un motif en relief peut être formé par imprimante 3D sur le film ou ruban.

L'avantage est de pouvoir changer les motifs à poinçonner ou estampiller sur la carte très facilement en les faisant varier tout le long d'un ruban selon les besoins de personnalisation graphique.

Alternativement, des motifs en relief métalliques ou plastiques (dont le graphisme est à transposer sur la surface de la carte) peuvent être fixés sur le ruban notamment par collage.

Ainsi, le procédé de l'invention permet d'obtenir un corps de support, au format carte, avec une personnalisation graphique présentant un effet de finition de surface plus ou moins lisse, rugueux, miroir ou mat sur ledit corps de support.

Le corps de support présente une couche de matière configurée pour permettre un marquage par poinçonnage ou lamination.

Selon une caractéristique, la couche de matière est exposée en face principale externe et présente un effet de finition de surface avec des motifs en relief marqués ou formés dans la matière de ladite couche tout en étant exempt de vernis.

La couche de matière externe peut être de type polymère ou non (métal, bois..) et forme une surface principale externe finie du corps de support.

La couche externe, située au niveau de la surface principale de la carte, peut présenter sur sa face externe des motifs en relief formés dans l'épaisseur de la couche externe de matière (celle située le plus à l'extérieur du corps de carte).

Le cas échéant, le procédé de l'invention peut réaliser plusieurs poinçonnages avec des films différents et des poinçons différents. Par exemple, des graphiques à reproduire sur un support sont sur un premier film et sont reproduit à l'aide d'un poinçon à tête de frappe plat (sans motif en relief), puis à un autre poste, le procédé utilise un second film présentant un micro relief de surface 15F (ou état de surface) pour un effet de surface tactile (mat ou miroir) qui est reproduit sur le support à l'aide d'un poinçon à tête de frappe également plat.

Par la suite s'il est nécessaire de reproduire un numéro bancaire, ce dernier peut être formé par embossage directement sur le support ou par jet d'encre directement sur le corps de carte.

Selon une variante de mise en oeuvre, le film 12 peut comporter à la fois des motifs pour conférer une finition de surface mat et d'autres motifs pour conférer une finition miroir sur le corps de support 1. On obtient ainsi sur le corps de support des motifs de personnalisation graphique visibles par contraste des différents effets de finition de surface (mats ou miroirs) des différents motifs. En effet, à elles seules, différentes finitions de surface sur des zones prédéterminées différentes, peuvent constituer une personnalisation graphique du corps de support.

## Revendications

1. Procédé de fabrication d'un corps de support (1), au format carte, avec une personnalisation graphique (15B, 8, 4) et présentant un effet de finition de surface plus ou moins lisse, rugueux, miroir ou mat sur ledit corps de support ; ledit procédé comprenant l'étape de fourniture d'un corps de support présentant une couche de matière (1) configurée pour permettre un marquage par poinçonnage, de sorte que ladite couche de matière (1) est exposée en face principale externe (15A) et ledit effet de finition de surface (15B) est équivalent à celui d'un vernis et est obtenu par une étape de marquage tout en étant exempt d'une étape de dépôt de vernis,
**caractérisé en ce que** ledit marquage s'effectue par poinçonnage à travers un film (12) interposé entre le poinçon (10) et ladite surface principale externe (15A).

2. Procédé selon la revendication précédente, **caractérisé en ce que** le film (12) est sous forme de ruban continu.

3. Procédé selon la revendication précédente, **caractérisé en ce que** le ruban continu (12) est déplacé pas à pas d'un poinçonnage au suivant pour présenter une nouvelle surface de ruban non poinçonnée à chaque poinçonnage ou après une série prédéterminée de poinçonnage.

4. Procédé selon l'une des revendications 1 à 3, **caractérisé en ce que** le film ou ruban (12) présente une surface (15F) mat ou miroir.

5. Procédé selon l'une des revendications 1 à 4, **caractérisé en ce que** le poinçon (10) présente un motif (11) de personnalisation en relief et/ou en creux par rapport à une surface générale du poinçon.

6. Procédé selon l'une des revendications 1 à 5, **caractérisé en ce que** le film ou ruban est un en matériau polymère ou en métal.

7. Procédé selon la revendication précédente, **caractérisé en ce que** la matière du film ou ruban polymère est choisie parmi le polyéthylène téréphtalate (PET), le polycarbonate (PC).

8. Procédé selon l'une quelconque des revendications précédentes, **caractérisé en ce que** le marquage ou poinçonnage s'effectue à chaud entre 100 à 250°C.

9. Procédé selon la revendication précédente, **caractérisé en ce que** ladite personnalisation graphique comprend un dépôt d'hologramme et/ou un embossage (7, 6c) et/ou un marquage par transfert thermique.

10. Procédé selon l'une des revendications 1 à 9, **caractérisé en ce que** le film comporte un motif graphique en relief et/ou un état de surface à effet mat ou miroir.

11. Procédé selon l'une des revendications 1 à 10, **caractérisé en ce qu'**il réalise plusieurs poinçonnages avec des films différents et des poinçons différents.

12. Procédé selon l'une des revendications 1 à 11, **caractérisé en ce que** ladite couche de matière est en matière polymère ou métallique.

13. Procédé selon l'une des revendications 1 à 12, dans lequel le corps de support forme un corps de carte à puce bancaire.

## Patentansprüche

1. Verfahren zum Herstellen eines Trägerkörpers (1) in Kartenformat mit einer grafischen Anpassung (15B, 8, 4) und die einen Finisheffekt einer mehr oder weniger glatten, rauen, glänzenden oder matten Oberfläche auf dem Trägerkörper aufweist;
das Verfahren umfassend den Schritt eines Bereitstellens eines Trägerkörpers, der eine Materialschicht (1) aufweist, die konfiguriert ist, um ein Körnen zu ermöglichen, so dass die Materialschicht (1) auf einer äußeren Hauptfläche (15A) freigelegt ist und der Finisheffekt der Oberfläche (15B) äquivalent zu dem von einem Lack ist und durch einen Stempelschritt erhalten wird, der frei von einem Lackabscheidungsschritt ist,
**dadurch gekennzeichnet, dass** das Stempeln durch Stanzen durch eine Folie (12) erfolgt, die zwischen der Patrize (10) und der äußeren Hauptoberfläche (15A) eingefügt ist.

2. Verfahren nach dem vorstehenden Anspruch, **dadurch gekennzeichnet, dass** die Folie (12) in Form eines kontinuierliche Bands vorliegt.

3. Verfahren nach dem vorstehenden Anspruch, **dadurch gekennzeichnet, dass** das kontinuierliche Band (12) Schritt für Schritt von einer Stanzung zur nächsten, um bei jeder Stanzung eine neue Oberfläche von nicht gestanztem Band aufzuweisen, oder nach einer vorbestimmten Stanzreihe bewegt wird.

4. Verfahren nach einem der Ansprüche 1 bis 3, **dadurch gekennzeichnet, dass** die Folie oder das Band (12) eine matte oder glänzende Oberfläche (15F) aufweist.

5. Verfahren nach einem der Ansprüche 1 bis 4, **dadurch gekennzeichnet, dass** die Patrize (10) ein Anpassungsmuster (11) mit Erhebungen und/oder Vertiefungen in Bezug auf eine allgemeine Oberfläche der Patrize aufweist.

6. Verfahren nach einem der Ansprüche 1 bis 5, **dadurch gekennzeichnet, dass** die Folie oder das Band aus einem Polymer- oder Metallmaterial besteht.

7. Verfahren nach dem vorstehenden Anspruch, **dadurch gekennzeichnet, dass** das Material der Polymerfolie oder des Polymerbands aus Polyethylenterephthalat (PET), Polycarbonat (PC) ausgewählt ist.

8. Verfahren nach einem der vorstehenden Ansprüche, **dadurch gekennzeichnet, dass** die Markierung oder die Stanzung bei einer Wärme zwischen 100 bis 250 °C erfolgt.

9. Verfahren nach dem vorstehenden Anspruch, **dadurch gekennzeichnet, dass** die grafische Anpassung eine Hologrammablagerung und/oder eine Prägung (7, 6c) und/oder eine Markierung durch Wärmeübertragung umfasst.

10. Verfahren nach einem der Ansprüche 1 bis 9, **dadurch gekennzeichnet, dass** die Folie ein grafisches Muster mit Erhebungen und/oder eine Oberflächenbeschaffenheit mit mattem oder glänzendem Effekt vorweist.

11. Verfahren nach einem der Ansprüche 1 bis 10, **dadurch gekennzeichnet, dass** es mehrere Stanzungen mit unterschiedlichen Folien und unterschiedlichen Patrizen ausführt.

12. Verfahren nach einem der Ansprüche 1 bis 11, **dadurch gekennzeichnet, dass** die Materialschicht aus Polymer- oder Metallmaterial besteht.

13. Verfahren nach einem der Ansprüche 1 bis 12, wobei der Trägerkörper einen Bankchipkartenkörper ausbildet.

## Claims

1. Method for producing a support body (1), in card format, with a graphic personalization (15B, 8, 4) and having, on said support body, a surface finishing effect that is smooth, rough, mirror or mat to a greater or lesser extent,
said method comprising the step of providing a support body having a layer of material (1) designed to allow marking by punching, so that said layer of material (1) is exposed on the outer main face (15A) and said surface finishing effect (15B) is equivalent to that of a varnish and is obtained by a marking step while being free of a varnish application step,
**characterized in that** said marking is carried out by punching through a film (12) interposed between the punch (10) and said outer main surface (15A).

2. Method according to the preceding claim, **characterized in that** the film (12) is in the form of a continuous tape.

3. Method according to the preceding claim, **characterized in that** the continuous tape (12) is moved step by step from one punch strike to the next in order to provide a new non-punched tape surface with each punch strike or after a predetermined series of punch strikes.

4. Method according to any of claims 1 to 3, **characterized in that** the film or tape (12) has a mat or mirror surface (15F).

5. Method according to any of claims 1 to 4, **characterized in that** the punch (10) has a personalization pattern (11) that is raised and/or recessed relative to a general surface of the punch.

6. Method according to any of claims 1 to 5, **characterized in that** the film or tape is a polymer or metal material.

7. Method according to the preceding claim, **characterized in that** the material of the polymer film or tape is selected from polyethylene terephthalate (PET) and polycarbonate (PC).

8. Method according to any of the preceding claims, **characterized in that** the marking or punching is carried out hot between 100 to 250°C.

9. Method according to the preceding claim, **characterized in that** said graphic personalization comprises hologram application and/or embossing (7, 6c) and/or thermal transfer marking.

10. Method according to any of claims 1 to 9, **characterized in that** the film comprises a raised graphic pattern and/or a surface finish with a mat or mirror effect.

11. Method according to any of claims 1 to 10, **characterized in that** a plurality of punch strikes are performed using different films and different punches.

12. Method according to any of claims 1 to 11, **characterized in that** said layer of material is made of polymer or metal material.

13. Method according to any of claims 1 to 12, wherein the support body forms a smart bank card body.
